# EUROPEAN PATENT APPLICATION

(11) **EP 4 209 459 A1**
(43) Date of publication of application: **12.07.2023**
(21) Application number: 21864220.5
(22) Date of filing: 26.08.2021
(51) Int. Cl.: C01G 23/00, C09K 19/02

(54) **INORGANIC-NANOSHEET MULTILAYER STRUCTURE, INORGANIC-NANOSHEET LIQUID-CRYSTAL COMPOSITION, METHOD FOR PRODUCING INORGANIC-NANOSHEET MULTILAYER STRUCTURE, AND METHOD FOR PRODUCING INORGANIC-NANOSHEET LIQUID-CRYSTAL COMPOSITION**

(30) Priority: 03.09.2020 JP 2020148028
(71) Applicant: Fukuoka Institute Of Technology, Fukuoka-shi, Fukuoka 811-0295 (JP)
(72) Inventor: MIYAMOTO Nobuyoshi, Fukuoka-shi, Fukuoka 811-0295 (JP); MIYOSHI Momoka, Fukuoka-shi, Fukuoka 811-0295 (JP)
(74) Representative: Hoffmann Eitle
(86) International application number: PCT/JP2021/031303
(87) International publication number: WO 2022/050162

(57) **Abstract**

Provided are an inorganic nanosheet laminated structure, an inorganic nanosheet liquid crystal composition, a method for producing an inorganic nanosheet laminated structure, and a method for producing an inorganic nanosheet liquid crystal composition that are capable of achieving a highly organized structure. The inorganic nanosheet laminated structure includes a string-like structure in which a plurality of inorganic nanosheets having a substantially uniform particle shape are laminated, in which a particle size distribution of the inorganic nanosheets is approximated by a normal distribution function with a single peak, a standard deviation of the particle size distribution is less than 50% of an average particle size of the inorganic nanosheets, and the particle size distribution is a particle size distribution in which when a maximum width of the inorganic nanosheets in plan view is a lateral width, an average value of the lateral width is determined as a particle size.

## Description

### Technical Field

The present invention relates to an inorganic nanosheet laminated structure, an inorganic nanosheet liquid crystal composition, a method for producing an inorganic nanosheet laminated structure, and a method for producing an inorganic nanosheet liquid crystal composition. In particular, the present invention relates to an inorganic nanosheet laminated structure, an inorganic nanosheet liquid crystal composition, a method for producing an inorganic nanosheet laminated structure, and a method for producing an inorganic nanosheet liquid crystal composition that are capable of forming a columnar nematic liquid crystal phase.

### Background Art

Conventionally, there is known a nanosheet liquid crystal that is a colloidal lyotropic liquid crystal in which a nanosheet obtained by peeling a layered crystal such as a layered niobium oxide serves as a mesogen (refer to, for example, Patent Literature 1 and Non Patent Literature 1). The inorganic nanosheets obtained from the layered niobium oxide are colloidally dispersed, thereby providing a new type of liquid crystal material that has not only characteristics of liquid crystals but also utilizable optical activities and electrical properties, which are properties peculiar to inorganic materials. Furthermore, a composite material with the structure of liquid crystals immobilized in a polymer gel or resin can be applied as a new functional material exhibiting anisotropic substance transport properties and optical properties.

### Citation List

### Patent Literature

Patent Literature 1: JP 2004-107527 A

### Non Patent Literature

Non Patent Literature 1: N. Miyamoto et al., Advanced Materials, 2002, 14, 1267

### Summary of Invention

### Technical Problem

However, the conventional inorganic nanosheet liquid crystal phase is mostly a nematic liquid crystal phase with low structural order, and it is difficult to precisely design a highly organized structure.

Therefore, an object of the present invention is to provide an inorganic nanosheet laminated structure, an inorganic nanosheet liquid crystal composition, a method for producing an inorganic nanosheet laminated structure, and a method for producing an inorganic nanosheet liquid crystal composition that are capable of achieving a highly organized structure.

### Solution to Problem

In order to achieve the above object, the present invention provides an inorganic nanosheet laminated structure including a string-like structure in which a plurality of inorganic nanosheets having a substantially uniform particle shape are laminated, in which a particle size distribution of the inorganic nanosheets is approximated by a normal distribution function with a single peak, a standard deviation of the particle size distribution is less than 50% of an average particle size of the inorganic nanosheets, and the particle size distribution is a particle size distribution in which when a maximum width of the inorganic nanosheets in plan view is a lateral width, an average value of the lateral width is determined as a particle size.

In addition, in order to achieve the above object, the present invention may be configured such that the string-like structure is oriented and a columnar nematic liquid crystal phase is expressed by setting the concentration of the inorganic nanosheets to a predetermined value or more in a predetermined solvent containing a predetermined salt.

In addition, in order to achieve the above object, the present invention provides an inorganic nanosheet liquid crystal composition including: an inorganic nanosheet laminated structure including a string-like structure in which a plurality of inorganic nanosheets having a substantially uniform particle shape are laminated, in which a particle size distribution of the inorganic nanosheets is approximated by a normal distribution function with a single peak, a standard deviation of the particle size distribution is less than 50% of an average particle size, and the particle size distribution is a particle size distribution in which when a maximum width of the inorganic nanosheets in plan view is a lateral width, an average value of the lateral width is determined as a particle size; a solvent; and a predetermined salt, in which the inorganic nanosheet laminated structure is oriented in the solvent to form a columnar nematic phase.

In addition, in order to achieve the above object, the present invention provides a method for producing an inorganic nanosheet laminated structure, the method including: a step of mixing an ammonium salt, a metal alkoxide, and a solvent to prepare a mixed solution; a step of refluxing the mixed solution to synthesize an inorganic nanosheet in which a particle shape is substantially uniform, a particle size distribution is approximated by a normal distribution function with a single peak, a standard deviation of the particle size distribution is less than 50% of an average particle size, and the particle size distribution is a particle size distribution in which when a maximum width of the inorganic nanosheet in plan view is a lateral width, an average value of the lateral width is determined as a particle size; and a step of adjusting a concentration of the inorganic nanosheet and a concentration of the ammonium salt in the mixed solution after the refluxing to a concentration at which a plurality of inorganic nanosheets are laminated.

In addition, in order to achieve the above object, the present invention provides a method for producing an inorganic nanosheet liquid crystal composition, the method including a step of mixing an ammonium salt, a metal alkoxide, and a solvent to prepare a mixed solution; a step of refluxing the mixed solution; a step of concentrating an inorganic nanosheet that is an inorganic nanosheet of the mixed solution after the refluxing, in which a particle shape is substantially uniform, a particle size distribution of the inorganic nanosheet is approximated by a normal distribution function with a single peak, a standard deviation of the particle size distribution is less than 50% of an average particle size, and the particle size distribution is a particle size distribution in which when a maximum width of the inorganic nanosheet in plan view is a lateral width, an average value of the lateral width is determined as a particle size; and a step of adjusting a concentration of the ammonium salt in the mixed solution to a concentration at which a predetermined liquid crystal phase is expressed.

### Advantageous Effects of Invention

The inorganic nanosheet laminated structure, the inorganic nanosheet liquid crystal composition, the method for producing an inorganic nanosheet laminated structure, and the method for producing an inorganic nanosheet liquid crystal composition according to the present invention can provide an inorganic nanosheet laminated structure, an inorganic nanosheet liquid crystal composition, a method for producing an inorganic nanosheet laminated structure, and a method for producing an inorganic nanosheet liquid crystal composition that are capable of achieving a highly organized structure.

### Brief Description of Drawings

Fig. 1 is a TEM image of a monodisperse inorganic nanosheet according to an example.
Fig. 2 is a diagram of a particle size distribution of monodisperse inorganic nanosheets according to examples.
Fig. 3 is a diagram illustrating an observation result by a polarization microscope including a sample in which a liquid crystal phase is observed when the TMA⁺ concentration is 2 M.
Fig. 4 is a diagram illustrating a crossed Nicols observation result when a water/ethanol ratio in the solvent is changed in a case where the TMA⁺ concentration is 0.08 M and the inorganic nanosheet concentration is 1 wt%.
Fig. 5 is a diagram illustrating the results of SAXS measurement when the inorganic nanosheet concentration is changed in a case where the TMA⁺ concentration is low (0.001 M to 0.3 M).
Fig. 6 is a diagram illustrating the results of SAXS measurement when the TMA⁺ concentration is changed in a case where the inorganic nanosheet concentration is 0.85 wt%.
Fig. 7 is a diagram illustrating the results of SAXS measurement when the inorganic nanosheet concentration is changed in a case where the TMA⁺ concentration is high (2M).
Fig. 8 is a diagram illustrating the results of SAXS measurement when a water/ethanol ratio in the solvent is changed in a case where the TMA⁺ concentration is 0.08 M and the inorganic nanosheet concentration is 1 wt%.
Fig. 9 is a diagram illustrating the results of TEM observation of a sample having a TMA⁺ concentration of 2 M and an inorganic nanosheet concentration of 22 wt%.
Fig. 10 is a diagram illustrating that the inorganic nanosheet liquid crystal composition reversibly undergoes a phase transition from an isotropic phase to a flow-birefringent isotropic phase due to a temperature change.
Fig. 11 is a diagram illustrating a result of POM observation illustrating that the inorganic nanosheet liquid crystal composition forms orthorhombic needle-like crystals at a temperature of 75°C.
Fig. 12 is a diagram illustrating a result of SAXS measurement illustrating that the inorganic nanosheet liquid crystal composition reversibly forms orthorhombic needle-like crystals due to a temperature change.

### Description of Embodiment

### [Findings on inorganic nanosheet laminated structure and inorganic nanosheet liquid crystal composition]

The conventional method for producing an inorganic nanosheet requires a peeling treatment step such as a step of intercalating a predetermined compound with a layered crystal to peel the layered crystal and a step of peeling the layered crystal by irradiation with ultrasonic waves, and therefore irregular crushing of the layered crystal occurs, failing to substantially uniform the particle size and shape of the inorganic nanosheet. That is, a part of the inorganic nanosheets is crushed by the peeling treatment step, and the shape and particle size of the inorganic nanosheets are not uniform. In the first place, the shape and particle size cannot be controlled. Therefore, it is impossible to control the expression of a highly ordered structure (for example, a columnar phase or the like) by the conventional method (so-called top-down method). Therefore, conventionally, only a liquid crystal state called a nematic liquid crystal phase or a swollen lamellar phase has been reported. Furthermore, the conventional DLVO theory, Onsager theory, and the like are based on the premise that the object is a stable colloidal system under the control of repulsive force, and are not based on the use of attraction induction as in organic thermotropic liquid crystals. That is, conventionally, in the design of liquid crystals using an inorganic material, the viewpoint of attraction induction has been almost ignored.

The inventor of the present invention has investigated for the purpose of precisely designing a highly organized structure in an inorganic nanosheet liquid crystal, and has found that extremely narrowing the particle size distribution of an inorganic nanosheet, typically, making the particle size and shape of the inorganic nanosheet substantially uniform actually greatly contributes to the formation of the highly organized structure of the inorganic nanosheet liquid crystal. Specifically, the inventor of the present invention has attempted to introduce precise control of the particle size and shape of the inorganic nanosheet and the viewpoint of attractive interaction into the synthesis of inorganic nanosheet liquid crystal, and has created the present invention. More specifically, the inventor of the present invention has constructed a bottom-up method in which an inorganic nanosheet is directly synthesized by stirring a solution obtained by mixing a predetermined metal alkoxide and a predetermined organic cation for a certain period of time. Then, by this synthesis method, a monodisperse inorganic nanosheet having an extremely narrow particle size distribution and a substantially uniform shape is synthesized, the concentration of the monodisperse inorganic nanosheet and the concentration of a salt to coexist are adjusted, and the interaction between the inorganic nanosheets is controlled to construct a liquid crystal system, resulting in completion of the present invention.

Furthermore, as a result of investigating the conditions under which the colloid of the monodisperse inorganic nanosheets obtained by synthesis forms a liquid crystal phase, the inventor of the present invention has found that when a monodisperse inorganic nanosheet having a particle size of about 20 nm and a predetermined organic cation coexist, the inorganic nanosheets form a column structure (inorganic nanosheet laminated structure, it may also be referred to as an "inorganic nanosheet laminated column" or an "inorganic nanosheet column") including a string-like structure like an organic supramolecular polymer (the formation is easier when both the monodisperse inorganic nanosheet and a predetermined organic cation coexist at a high concentration), and that the column is oriented to express a columnar nematic liquid crystal phase. This column structure can also be regarded as a layered crystal having an extremely unique shape with a long axis in a direction perpendicular to the laminating plane. Furthermore, the formation of the column and liquid crystal is reversible. The present invention is based on these findings.

Hereinafter, the inorganic nanosheet laminated structure and the inorganic nanosheet liquid crystal composition according to the present embodiment will be described in detail.

### [Details of inorganic nanosheet laminated structure and inorganic nanosheet liquid crystal composition]

In the present embodiment, a string-like inorganic nanosheet column (inorganic nanosheet laminated structure) in which inorganic nanosheets are laminated is formed by adjusting conditions such as an inorganic nanosheet colloid obtained by adjusting the particle size distribution of the inorganic nanosheets and a coexisting material. Then, the inorganic nanosheet column is spontaneously oriented to reversibly form a columnar nematic liquid crystal phase (inorganic nanosheet liquid crystal composition).

That is, the inorganic nanosheet laminated structure according to the present embodiment is an inorganic nanosheet laminated structure including a string-like structure including a plurality of inorganic nanosheets laminated at a predetermined interval. That is, the inorganic nanosheet laminated structure includes a string-like structure in which inorganic nanosheets are laminated at a predetermined interval. In addition, the inorganic nanosheet liquid crystal composition according to the present embodiment is a composition obtained by containing an inorganic nanosheet laminated structure including a string-like structure including inorganic nanosheets laminated at a predetermined interval, a solvent, and a predetermined salt, followed by orientation of the inorganic nanosheet laminated structure in the solvent to form a columnar nematic phase.

### <Inorganic nanosheet>

The inorganic nanosheet according to the present embodiment is a thin sheet-shaped inorganic crystal as a unit structure obtained by synthesis using a predetermined compound. For example, the inorganic nanosheet according to the present embodiment is obtained by reacting a predetermined ammonium salt with a predetermined metal alkoxide. The composition and shape of the inorganic nanosheet are determined according to the type and mixing ratio of the ammonium salt and the metal alkoxide used for the synthesis. That is, the shape and thickness of the inorganic nanosheet reflect the crystallographic structure of the inorganic compound to be subjected to the synthesis.

The inorganic nanosheet obtained by the synthesis has, for example, a thickness of several nm (for example, in the case of a lepidocrocite type titanic acid nanosheet, the thickness is 0.75 nm) and a width of about tens of nm to several tens of nm. As a result, the inorganic nanosheet has a shape with large anisotropy (that is, a shape having a high aspect ratio). Herein, the "particle size" of the inorganic nanosheet according to the present embodiment is defined as follows.

The "particle size" of the inorganic nanosheet is substantially a lateral width of the inorganic nanosheet. That is, when the maximum width of the inorganic nanosheet in plan view is defined as a lateral width w, the average value of the lateral width w is defined as the "particle size" in the present embodiment. However, in the present embodiment, the inorganic nanosheet is obtained by synthesis, and therefore the shape of the inorganic nanosheet is reflected from the crystallographic structure of the inorganic compound to be subjected to the synthesis to become a substantially uniform predetermined shape (for example, a rectangular shape or a rhombus shape). In this case, the "particle size" of the inorganic nanosheet is the lateral width of the predetermined shape. For example, when the shape of the inorganic nanosheet is a rectangle, the lateral width can be represented by a combination of the length of the short side and the length of the long side (alternatively, the lengths of the diagonal lines), and when the shape is a rhombus, the lateral width can be represented by a combination of the length of the long axis and the length of the short axis. The "particle size" of the inorganic nanosheet can be measured and calculated by using, for example, a measuring means such as a dynamic light scattering method or an electron microscope. In addition, a thickness t of the inorganic nanosheet is determined depending on the crystal structure of the inorganic material to be synthesized. The thickness of the inorganic nanosheet can be measured by atomic force microscope observation or small-angle X-ray scattering measurement.

In addition, the particle size of the inorganic nanosheet according to the present embodiment is not limited. However, from the viewpoint of highly organizing the inorganic nanosheet, substantial monodisperse is preferable.

Herein, "monodisperse" of the inorganic nanosheet in the present embodiment means that the following conditions are satisfied.
(1) The particle shape observed with a transmission electron microscope is substantially uniform (for example, when the shape of the inorganic nanosheets observed with a transmission electron microscope is a rhombus, the ratio of the short axis to the long axis of the rhombus of each of the inorganic nanosheets observed is 1.4:1, and the lateral widths of the inorganic nanosheets are substantially the same, the shapes can be determined to be substantially uniform).
(2) A particle size distribution measured by a transmission electron microscope or the like is approximated by a normal distribution function with a single peak, and a standard deviation thereof is less than 50% and approximately 40% or less of the average particle size (when this condition is satisfied, the particle size distribution can be recognized to be extremely narrow).

In the case of the inorganic nanosheets obtained by the conventional peeling method, the particle shape is amorphous, and the standard deviation of the particle size is about 50 to 200% of the average particle size, which can be clearly distinguished from the "monodisperse" inorganic nanosheets in the present embodiment.

In addition, in the present description, "substantially uniform" does not mean that the particle sizes and shapes of the inorganic nanosheets literally completely coincide with each other in every inorganic nanosheet, but means that in a case where inorganic nanosheets having different particle sizes and shapes are partially present, the standard deviation of the particle size distribution is within a predetermined value, and by showing a predetermined liquid crystal state or the like in a solution or colloid state, it is recognized that the inorganic nanosheets are in a state where the particle sizes and shapes are uniform in content and essence. In addition, "substantially monodisperse" has the same meaning.

The inorganic nanosheet is not particularly limited as long as it is an inorganic nanosheet obtained by synthesis. That is, there is no particular limitation as long as the inorganic nanosheet can constitute the layered inorganic compound and can be synthesized. Examples of the layered inorganic compound include layered metal chalcogenides, layered metal oxides (for example, titanium oxide, a layered perovskite compound, titanium niobate, and molybdate), layered metal oxyhalides, layered metal phosphates (for example, layered antimony phosphate), clay minerals or layered silicates (for example, mica, smectite group (montmorillonite, saponite, hectorite, fluorohectorite, and the like), kaolin group (kaolinite and the like), magadiite, and kanemite), and layered double hydroxides. Examples of the inorganic nanosheets include various oxide-based nanosheets such as silica nanosheets, titanium oxide nanosheets, niobium oxide nanosheets, and cobalt oxide nanosheets.

In the present embodiment, for example, a layered titanate can be synthesized and used. Examples of the layered titanate include lepidocrocite type layered titanate (for example, CsₓTi_{2-x/4}O₄ (where 0.5 ≤ x ≤ 1), AₓTi_{2-x/3}Li_{x/3}O₄ (where A = K, Rb, Cs, 0.5 ≤ x ≤ 1)) that is a crystal having a layered structure formed by a chain of TiO₆ octahedron and having metal ions between layers thereof. Specific examples of the lepidocrocite type layered titanate include K_{0.8}Ti_{1.73}Li_{0.27}O₄, Rb_{0.75}Ti_{1.75}Li_{0.25}O₄, Cs_{0.7}Ti_{1.77}Li_{0.23}O₄, and Cs_{0.7}Ti_{1.825}O₄.

### <Synthesis of monodisperse inorganic nanosheets>

Examples of the method for synthesizing the monodisperse inorganic nanosheets include a method obtained by improving the previously reported synthesis method based on the previous report (E. L. Tae, et al., J. Am. Chem. Soc., 2008, 130, 6534). For example, from the viewpoint of easy control of the particle size and shape of the inorganic nanosheets, a method of stirring or refluxing a mixed solution obtained by mixing raw materials in a predetermined solvent can be used. Specifically, a mixed solution obtained by adding a metal alkoxide to an alkali solution or a mixed solution obtained by adding a predetermined ammonium salt and a predetermined metal alkoxide to a predetermined solvent (for example, water) is prepared, and the mixed solution is stirred or refluxed to allow synthesis of a colloid (hereinafter, referred to as "monodisperse inorganic nanosheet colloid") containing monodisperse inorganic nanosheets. The particle size and the shape can be precisely controlled by synthesizing the inorganic nanosheets using the mixed solution as in the present embodiment, and thus monodisperse inorganic nanosheets can be synthesized.

The concentration of the inorganic nanosheet in the monodisperse inorganic nanosheet colloid can be adjusted depending on the amount of each of the plurality of raw materials (for example, ammonium salts and metal alkoxides) to be mixed with the solvent and/or the ratio of the plurality of raw materials (for example, the ratio of the amount of metal alkoxide to the amount of ammonium salt), for example.

As an example, a monodisperse inorganic nanosheet colloid with a lepidocrocite type layered titanate can be prepared by reacting a metal alkoxide with an ammonium salt and refluxing for a predetermined time. This forms substantially monodisperse inorganic nanosheets in the colloid.

### (Ammonium salt)

An alkyl ammonium salt can be used as the ammonium salt. For example, a quaternary ammonium compound can be used as the alkyl ammonium salt. Examples of the quaternary ammonium compound include tetramethylammonium hydroxide (TMAOH), tetraethylammonium hydroxide (TEAOH), tetrapropylammonium hydroxide (TPAOH), tetrabutylammonium hydroxide (TBAOH), and trimethyl-2-hydroxyethylammonium hydroxide.

Herein, the alkyl ammonium salt can be used as a solution added to a predetermined solvent. For example, an aqueous solution of an alkyl ammonium salt can be used. In this case, the concentration of the alkyl ammonium salt in the aqueous solution of an alkyl ammonium salt is not particularly limited as long as it is a concentration at which monodisperse inorganic nanosheets can be synthesized, and for example, from the viewpoint of easily synthesizing monodisperse inorganic nanosheets, the concentration is preferably 0.1 M or more, also preferably 0.3 M or more, and may be 2 M or less.

### (Metal alkoxide)

Examples of the metal alkoxide include a metal alkoxide represented by the following general formula (1).

M(OR)₄ General Formula (1)

In the general formula (1), M represents a metal element, and R represents the same type or different types of alkyl groups having 1 or more and 10 or less carbon atoms. M is, for example, an element selected from the group consisting of Mg, Al, Si, Ca, V, Cr, Mn, Fe, Co, Ni, Zn, Ga, Ge, Sr, Zr, Nb, Mo, Ru, Rh, Pd, Ag, Cd, In, Sn, Sb, Ba, Ta, W, Re, Os, Ir, Pb, La, Ce, Nd, Sm, Eu, Gd, Tb, and Dy. In addition, R is preferably an alkyl group having 1 to 4 carbon atoms from the viewpoint of achieving an appropriate reaction rate, and is preferably, for example, a methyl group, an ethyl group, a propyl group, an isopropyl group, an n-propyl group, an n-butyl group, a sec-butyl group, an isobutyl group, and a ter-butyl group.

Specific examples of the metal alkoxide include aluminum triethoxide, aluminum triisopropoxide, aluminum tributoxide, aluminum tri-sec-butoxide, aluminum diisopropoxy sec-butoxide, aluminum diisopropoxy acetylacetonate, aluminum di sec-butoxy acetylacetonate, aluminum diisopropoxyethylacetoacetate, aluminum di(sec-butoxyethylacetoacetate), aluminum trisacetylacetonate, aluminum trisethylacetoacetate, aluminum acetylacetonate bisethylacetoacetate, titanium tetraethoxide, titanium tetraisopropoxide, titanium tetrabutoxide, titanium diisopropoxybisacetylacetonate, titanium diisopropoxybisethylacetoacetate, titanium tetra-2-ethylhexyl oxide, titanium diisopropoxybis(2-ethyl-1,3-hexanediolate), titanium dibutoxy bis(triethanolaminate), zirconium tetrabutoxide, zirconium tetraisopropoxide, zirconium tetramethoxide, zirconium tributoxide monoacetylacetonate, zirconium dibutoxide bisacetylacetonate, zirconium butoxide trisacetylacetonate, zirconium tetraacetylacetonate, zirconium tributoxide monoethylacetoacetate, zirconium dibutoxide bisethylacetoacetate, zirconium butoxide trisethylacetoacetate, and zirconium tetraethylacetoacetate. Other examples thereof include cyclic 1,3,5-triisopropoxycyclotrialuminoxane.

In the synthesis of the monodisperse inorganic nanosheets, the pH is mainly set in a range suitable for synthesis by setting the alkylammonium concentration to a certain range. Then, depending on the concentration of the metal alkoxide, the number of nucleations at the initial stage of synthesis of the inorganic nanosheets and the particle size thereafter are determined. For example, in the synthesis of the monodisperse inorganic nanosheets according to the present embodiment, when the alkylammonium concentration is 0.3 M, the reaction is performed at a metal alkoxide concentration of preferably 0.1 M or more, more preferably 0.2 M or more, and preferably 1 M or less. The average particle size of the obtained inorganic nanosheets can be controlled by adjusting the amount of the metal alkoxide relative to the unit amount of the ammonium salt during synthesis of the monodisperse inorganic nanosheets.

### (Stirring or refluxing condition)

The stirring or refluxing condition is not particularly limited. The stirring condition may be, for example, a condition of stirring in air (that is, under the air atmosphere) at room temperature (for example, 25°C) for a predetermined time. In addition, the refluxing condition may be, for example, a condition of refluxing at a temperature exceeding room temperature (as an example, a predetermined temperature of 40°C or more or 70°C or more and 100°C or less) for a predetermined time under the air atmosphere. The average particle size of the inorganic nanosheets can be controlled by the refluxing time. That is, the average particle size of the inorganic nanosheets can be increased as the refluxing time is longer.

### (Solvent)

An aqueous solvent, for example, pure water can be used as the solvent.

### <Inorganic nanosheet laminated structure and inorganic nanosheet liquid crystal composition>

The inorganic nanosheet liquid crystal composition according to the present embodiment is a liquid crystal composition containing an inorganic nanosheet laminated structure including the monodisperse inorganic nanosheets obtained as described above, a solvent, and a predetermined salt, in which the inorganic nanosheet laminated structure is oriented in the solvent to form a columnar nematic phase. For example, by concentrating the monodisperse inorganic nanosheet colloid to adjust the concentration of the monodisperse inorganic nanosheets to a predetermined concentration and adjusting the concentration of a predetermined salt coexisting with the monodisperse inorganic nanosheets, there is obtained an inorganic nanosheet laminated structure including a string-like structure constituted by a periodic structure in which inorganic nanosheets are laminated at an interval of several nm. Then, the orientation of this inorganic nanosheet laminated structure provides an inorganic nanosheet liquid crystal composition expressing a columnar nematic liquid crystal phase.

### (Solvent and salt)

Herein, the solvent may be a solvent of the monodisperse inorganic nanosheet colloid. In addition, the predetermined salt may be a salt derived from a raw material used for synthesis of the monodisperse inorganic nanosheet colloid. That is, when a predetermined ammonium salt and a predetermined metal alkoxide are mixed in a predetermined solvent, this ammonium salt may be a predetermined salt. A salt different from the raw material used for the synthesis of the monodisperse inorganic nanosheet colloid (for example, an ammonium salt) may be separately added.

In addition, a mixed solvent of two or more solvents different from each other may be used as the solvent. When the mixed solvent is used, the solvent composition is adjusted to a composition within a range in which the inorganic nanosheet liquid crystal composition can be obtained. For example, when a mixed solvent of a first solvent and a second solvent different from the first solvent is used, the ratio between the first solvent and the second solvent is adjusted to that of a composition within a range in which the inorganic nanosheet liquid crystal composition is obtained. Examples of the first solvent include water. In addition, examples of the second solvent include organic solvents such as methanol and ethanol.

### <Liquid crystallization of monodisperse inorganic nanosheet colloid (method for producing inorganic nanosheet liquid crystal composition)>

The method for preparing the inorganic nanosheet liquid crystal composition is not particularly limited. For example, a mixed solution is prepared by adding a predetermined alkyl ammonium salt and a predetermined metal alkoxide to a predetermined solvent, and this mixed solution is refluxed to synthesize a monodisperse inorganic nanosheet colloid. Then, by adjusting the concentration of the inorganic nanosheet in the synthesized monodisperse inorganic nanosheet colloid to a predetermined concentration or more, there is obtained an inorganic nanosheet liquid crystal composition capable of expressing a predetermined liquid crystal phase. Furthermore, by adjusting the concentration of a predetermined salt in the inorganic nanosheet liquid crystal composition, it is possible to adjust the attractive interaction of the inorganic nanosheet, and a predetermined liquid crystal phase is expressed.

For example, the inorganic nanosheet liquid crystal composition can be prepared by any of the following four methods.

The first approach is to concentrate the monodisperse inorganic nanosheet colloid, followed by diluting the concentrated monodisperse inorganic nanosheet colloid with a predetermined alkyl ammonium salt solution. Specifically, first, a monodisperse inorganic nanosheet colloid obtained by refluxing a mixed solution in which a predetermined alkyl ammonium salt and a predetermined metal alkoxide are mixed in a solvent such as water is concentrated so that the concentration of the inorganic nanosheet becomes a predetermined concentration or more. Thus, the concentration of the inorganic nanosheet in the monodisperse inorganic nanosheet colloid is increased to a predetermined concentration or more. The concentration method is not particularly limited. For example, the concentration can be performed by heating the monodisperse inorganic nanosheet colloid to evaporate the solvent, by dialysis, by centrifugation, or the like.

Subsequently, the monodisperse inorganic nanosheet colloid having a predetermined concentration or more of an inorganic nanosheet is diluted by using a solution containing a predetermined alkyl ammonium salt. For example, a predetermined alkyl ammonium salt aqueous solution is added to a monodisperse inorganic nanosheet colloid having a predetermined concentration or more of an inorganic nanosheet in an amount to achieve a desired salt concentration (that is, the concentration at which a predetermined liquid crystal phase is expressed), and the mixture is stirred. This forms the inorganic nanosheet laminated structure according to the present embodiment, and provides an inorganic nanosheet liquid crystal composition.

A second method is a method of adding a salt such as alkylammonium chloride to the monodisperse inorganic nanosheet colloid. This forms an inorganic nanosheet laminated structure, and provides an inorganic nanosheet liquid crystal composition.

A third method is a method of dialyzing the monodisperse inorganic nanosheet colloid to lower the alkylammonium concentration and pH, followed by performing concentration. Specifically, first, desalting is performed by dialyzing, using a solution containing a predetermined alkyl ammonium salt, a monodisperse inorganic nanosheet colloid obtained by refluxing a mixed solution in which a predetermined alkyl ammonium salt and a predetermined metal alkoxide are mixed in a solvent such as water. The desalting amount is adjusted by adjusting dialysis conditions (for example, the number of dialysis), and the salt concentration in the monodisperse inorganic nanosheet colloid is set to a predetermined concentration. Then, the monodisperse inorganic nanosheet colloid after desalting is concentrated so that the concentration of the inorganic nanosheet becomes a predetermined concentration or more. The concentration method is the same as described above. This forms the inorganic nanosheet laminated structure according to the present embodiment, and provides an inorganic nanosheet liquid crystal composition.

A fourth approach is to adjust the solvent composition of the monodisperse inorganic nanosheet colloid. Specifically, another solvent such as ethanol is added in a certain amount to the sample obtained by the first, second, or third method. This forms an inorganic nanosheet laminated structure, and provides an inorganic nanosheet liquid crystal composition.

From the viewpoint of easily preparing a sample having a high salt concentration, it is preferable to use the first or second method, and from the viewpoint of lowering the salt concentration, it is preferable to use the third method. In addition, from the viewpoint of adjusting the solvent composition, it is preferable to use the fourth approach.

### (Concentration of salt and concentration of inorganic nanosheet)

In the inorganic nanosheet liquid crystal composition, the salt concentration is preferably 1 M or more, more preferably 1.5 M or more, and still more preferably 1.6 M or more, from the viewpoint of controlling the interaction between the inorganic nanosheets to appropriately form an inorganic nanosheet laminated structure and forming a predetermined liquid crystal phase. The upper limit of the salt concentration is not particularly limited, but it is considered that the inorganic nanosheet and/or the inorganic nanosheet laminated structure precipitate when the salt concentration becomes a predetermined concentration or more. In addition, the concentration of the inorganic nanosheet of the inorganic nanosheet liquid crystal composition may be 0.8 wt% or more as long as the salt concentration is 1 M or more. Furthermore, the concentration of the inorganic nanosheet may be the maximum concentration at which the inorganic nanosheet can be dissolved in the solution. The concentration of the inorganic nanosheet in the inorganic nanosheet liquid crystal composition is the concentration when each of a plurality of inorganic nanosheets constituting the inorganic nanosheet laminated structure is present singly.

By adjusting the inorganic nanosheet concentration and the salt concentration in the monodisperse inorganic nanosheet colloid, an inorganic nanosheet laminated structure including a string-like structure of the monodisperse inorganic nanosheet is formed, and the inorganic nanosheet laminated structure is oriented to provide an inorganic nanosheet liquid crystal composition expressing a columnar nematic liquid crystal phase. Expression of the liquid crystal phase can be confirmed by, for example, crossed Nicols observation.

### <Example of application fields>

In the inorganic nanosheet laminated structure and the inorganic nanosheet liquid crystal composition according to the present embodiment, the inorganic nanosheet has a high aspect ratio and a large specific surface area, and thus can be applied to a wide range of fields such as inorganic or polymer composite materials. In particular, not only the present embodiment facilitates the control of orientating the monodisperse inorganic nanosheet and the like, but also the basic principle of the inorganic nanosheet laminated structure and the inorganic nanosheet liquid crystal composition can be applied to any inorganic nanosheets. Therefore, the present invention can be applied to a wide range of fields as a basic technology for basic material development. Specifically, by using the inorganic nanosheet laminated structure and the inorganic nanosheet liquid crystal composition according to the present embodiment, an inorganic supramolecular structure mainly including a precisely synthesized monodisperse inorganic nanosheet can be designed to provide an advanced structure, and therefore there is expected application to a supramolecular mechanics material using a material mainly including an inorganic material. For example, fields of application considered include inorganic supramolecular materials mainly including inorganic nanosheets, composite materials, electronic devices, optical devices, catalysts, adsorption materials, separation membranes, actuators, electrode materials, and the like, and in particular, there are expected expression of physical properties and improvement of physical properties by orientation of inorganic nanosheets. In addition, there are expected applications to an artificial muscle, an optical material, a gas barrier material, a separation membrane, and the like.

### <Effects of embodiment>

In the conventional method for obtaining the inorganic nanosheets by peeling the layered inorganic crystals, the particle size distribution of the obtained inorganic nanosheets is significantly wide due to the fact that the inorganic nanosheets are crushed during peeling, the particle sizes of the layered inorganic crystals themselves as raw materials are uneven, and the like. Whereas, in the inorganic nanosheet laminated structure and the inorganic nanosheet liquid crystal composition according to the present embodiment, an inorganic nanosheet is synthesized by a bottom-up method, and thus an inorganic nanosheet having a substantially uniform particle size and shape can be obtained from a raw material solution. Therefore, an inorganic nanosheet having a significantly narrow particle size distribution can be obtained. The inorganic nanosheet that can be synthesized by the bottom-up method can control the particle size distribution to be significantly narrow, and thus can be applied to various synthesizable inorganic nanosheets.

In addition, in the conventional inorganic nanosheet having a wide particle size distribution, in most cases, there has been obtained a nematic liquid crystal phase in which only the orientation of the inorganic nanosheet is uniform. In the conventional method, a nematic liquid crystal phase may be obtained by allowing an inorganic nanosheet and a predetermined salt to coexist and setting the salt concentration to an extremely low level. However, the salt concentration is increased to reduce the repulsive force between the inorganic nanosheets, which results in irregular aggregation of the inorganic nanosheets. Whereas, in the inorganic nanosheet laminated structure and the inorganic nanosheet liquid crystal composition according to the present embodiment, irregular aggregation is suppressed because the particle size distribution of the inorganic nanosheet is narrow, and instead, a string-like inorganic nanosheet laminated column is obtained. Furthermore, the inorganic nanosheet laminated column is oriented to provide a liquid crystal of a columnar nematic phase. Therefore, the inorganic nanosheet laminated structure and the inorganic nanosheet liquid crystal composition according to the present embodiment can achieve a structure in which the inorganic nanosheets are highly organized.

Furthermore, in the case of a conventional method of synthesizing a thin film or a composite material using an inorganic nanosheet colloid of a nematic phase or a smectic phase, it is easy to obtain a material in which an inorganic nanosheet is horizontally oriented with a thin film surface, but it is difficult to obtain a vertically oriented material. Whereas, according to the present embodiment, by using the inorganic nanosheet colloid in a columnar nematic state, a nanosheet material in a vertically oriented state can be prepared by a simple operation such as casting and drying or flow orientation. In such a film, it is possible to maximize the characteristics such as the large specific surface area of the inorganic nanosheet, and thus application to a filtration separation membrane, a catalyst, or the like having very excellent performance can be expected. In addition, a hierarchical structure that has not conventionally been possible can be constructed, and thus application to the development of high-performance artificial muscles and the like is possible.

### Examples

Hereinafter, the inorganic nanosheet laminated structure and the inorganic nanosheet liquid crystal composition according to the present embodiment will be described in detail with using examples.

### <Synthesis of monodisperse inorganic nanosheet colloid>

For the monodisperse inorganic nanosheet colloid, 9.5 g of titanium tetraisopropoxide (TIP) was added to 150 ml of a 0.3 M aqueous tetramethylammonium hydroxide (TMAOH) solution, and the mixture was stirred at room temperature under the air atmosphere for 10 minutes, and then refluxed at 80°C under the air atmosphere for 24 hours. This provided a monodisperse inorganic nanosheet colloid. The molar ratio of TMAOH to TIP during synthesis was 1.23:1. In addition, the concentration of the inorganic nanosheet in the monodisperse inorganic nanosheet colloid obtained by the preparation was 3.4 wt%.

### (X-ray diffraction)

The obtained monodisperse inorganic nanosheet colloid was dried at 80°C for 24 hours in the air atmosphere, and the thus obtained sample was analyzed by an X-ray diffractometer (XRD-7000L, manufactured by Shimadzu Corporation, measurement conditions: CuKα characteristic X-ray, 40 kV, 30 mA). As a result, peaks attributable to the lepidocrocite-type titanic acid nanosheets were confirmed at positions of 20 of 48.28° and 62.64°. Thus, the inorganic nanosheets were confirmed to be synthesized.

### (Transmission electron microscope (TEM) observation)

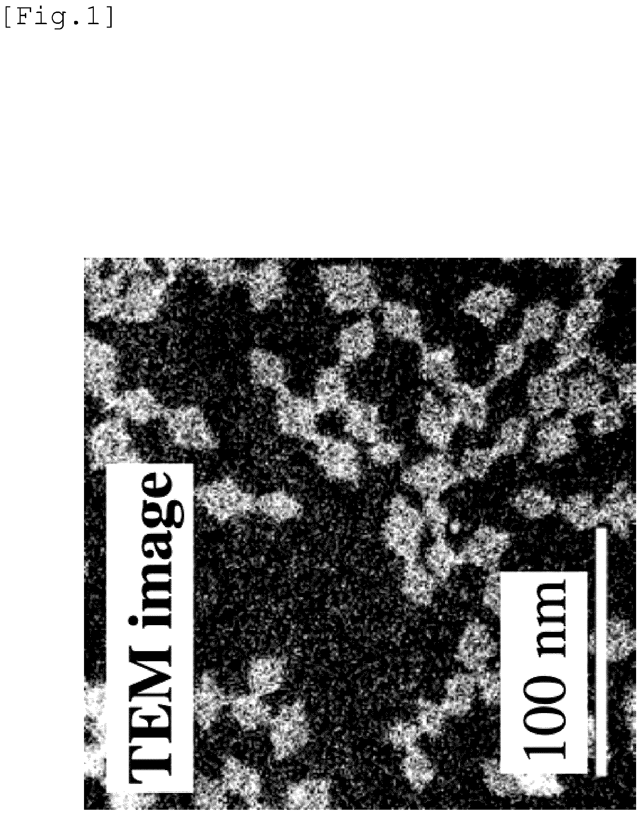

Fig. 1 is a TEM image of a monodisperse inorganic nanosheet according to an example.

Observation of the obtained monodisperse inorganic nanosheet colloid using a transmission electron microscope (TEM/STEM JEOL, JEM-1400) confirmed a rhombus-shaped monodisperse inorganic nanosheet having one side of 11 nm as illustrated in Fig. 1. As a result of confirming 200 pieces of inorganic nanosheets, it was confirmed that all the inorganic nanosheets had a rhombus shape with one side of about 11 nm. The thickness of the inorganic nanosheet was 0.75 nm.

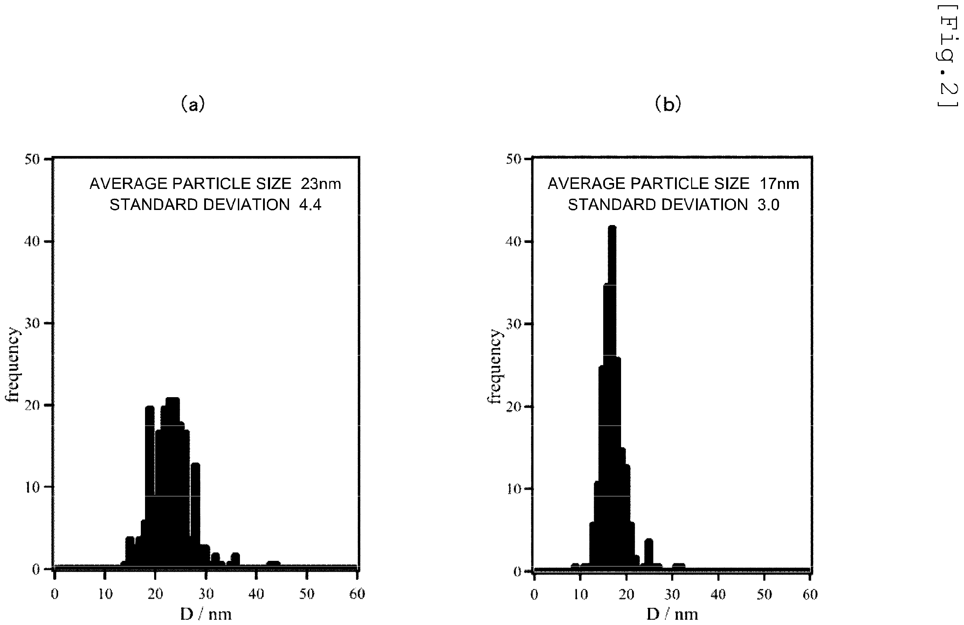

Fig. 2 illustrates the particle size distribution of the monodisperse inorganic nanosheet according to examples.

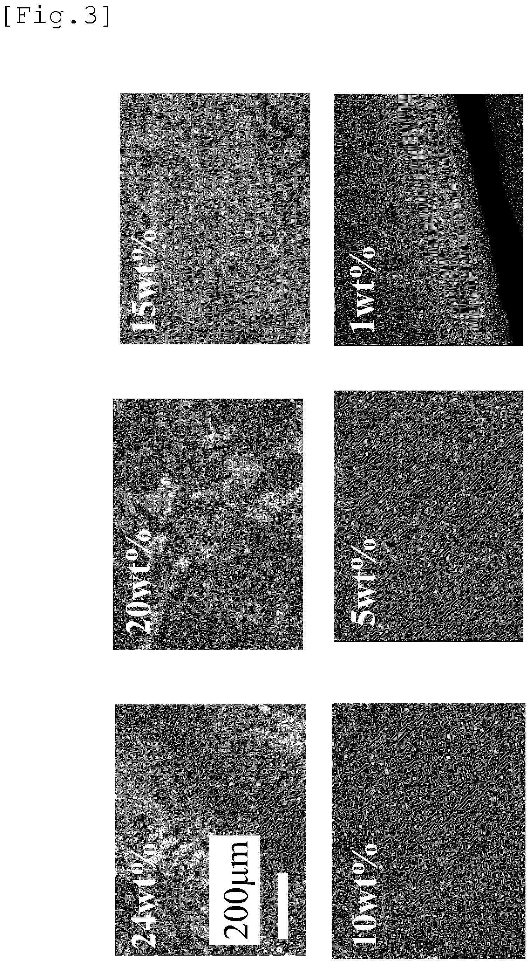

In addition, a transmission electron microscope (TEM/STEM JEOL, JEM-1400) was used to provide a STEM image, and 200 pieces of inorganic nanosheets were measured on the obtained STEM image to calculate the average particle size and the standard deviation of the average particle size. As a result, the obtained monodisperse inorganic nanosheets had an average particle size of 23 nm in the long axis direction and 17 nm in the short axis direction, and had one side of 11 nm. Furthermore, the standard deviation of the average particle size of the obtained monodisperse inorganic nanosheets was 4.4 nm (19% of the average particle size) in the long axis as illustrated in Fig. 2(a), and 3.0 nm (18% of the average particle size) in the short axis as illustrated in Fig. 2(b). This has demonstrated that the lepidocrocite-type titanic acid nanosheets present in the obtained monodispersed inorganic nanosheet colloid are substantially monodispersed.

In the synthesis of the monodisperse inorganic nanosheet colloid, tetraethylammonium hydroxide (TEAOH), tetrapropylammonium hydroxide (TPAOH), and tetrabutylammonium hydroxide (TBAOH) were used in place of TMAOH to prepare a monodisperse inorganic nanosheet colloid in the same manner as in the case of using TMAOH. As a result, it was confirmed that monodisperse inorganic nanosheets were obtained in the same manner as described above.

### <Liquid crystallization of monodisperse inorganic nanosheet colloid (method for producing inorganic nanosheet liquid crystal composition)>

Then, using the monodisperse inorganic nanosheets synthesized using TMAOH, there were prepared samples in which the salt concentration (that is, the concentration of tetramethylammonium [TMA⁺ concentration]) was low (salt concentration in the range of 10⁻⁴ M to 10⁻³ M) or high (salt concentration in the range of 1.5 M to 2 M) and the inorganic nanosheet concentration was in the range of 0.5 wt% to 24 wt%. Specifically, there were prepared samples corresponding to the combination of salt concentrations and inorganic nanosheet concentrations listed in Table 1.

A sample having a low salt concentration was first desalted by dialysis of the monodisperse inorganic nanosheet colloid obtained above using a TMAOH aqueous solution (TMAOH concentration: 10⁻⁴ M) (dialysis conditions: dialysis for 5 days, with the solution changed every day). Then, the solvent (water) of the desalted monodisperse inorganic nanosheet colloid was evaporated by using an evaporator to be concentrated (concentration condition: heating temperature of 60°C). The concentration was performed for the time required to obtain the inorganic nanosheets of the intended concentration. Thereafter, further dialysis was performed by using a 10⁻³ M aqueous TMAOH solution. This provided samples with a low salt concentration (10⁻³ M) and an inorganic nanosheet concentration in the range of 5 wt% to 18 wt%.

In addition, for the high salt concentration sample, first, 7.3-fold concentrated monodisperse inorganic nanosheet colloid was obtained by an evaporator (that is, the mixture was concentrated until the inorganic nanosheet concentration reached 24.8 wt%). Then, the concentrated monodisperse inorganic nanosheet colloid was diluted by adding a TMAOH aqueous solution (concentration: 2 M) and water. Dilution was performed by adding predetermined amounts of TMAOH aqueous solution and water required to obtain inorganic nanosheets of an intended concentration. This provided samples with a high salt concentration and an inorganic nanosheet concentration in the range of 0.5 wt% to 24 wt%.

In addition, for the sample in which the water/ethanol ratio in the solvent was changed, predetermined amounts of water and ethanol were added to the monodisperse inorganic nanosheet colloid (nanosheet concentration 3.4 wt%, TMAOH concentration 0.273 M), thereby providing a sample having an inorganic nanosheet concentration of 1 wt%, a TMAOH concentration of 0.08 M, and an ethanol ratio in the solvent of 0 to 70%.

Thus, inorganic nanosheet compositions (Experimental Examples 1 to 22) were prepared.

### (Observation of birefringence)

The inorganic nanosheet composition obtained as described above was subjected to crossed Nicols observation using two commercially available general polarizing films (such as BSP 250 perchased in Tokyu Hands) or a polarization microscope (POM: BX51-P manufactured by Olympus Corporation). Table 1 lists the presence or absence of observation of birefringence and the like in association with the salt concentration and the inorganic nanosheet concentration. In the column "Birefringence in POM/crossed Nicols observation" in Table 1, a case where strong birefringence was observed is represented by "⊙", a case where weak birefringence was observed is represented by "∘", a case where flow birefringence was observed is represented by "Δ", and a case where birefringence was not observed is represented by "×". In addition, in the column "SAXS stacking peak" in Table 1, a case where the peak intensity was strong is represented by "∘", a case where the peak intensity was weak is represented by "Δ", and a case where there was no peak is represented by "×". Furthermore, in Table 1, in the column "Nanosheet state", "N_{c}" indicates that a columnar nematic liquid crystal was observed, "I_{c}" indicates that an isotropic phase of the laminated column was observed, and "I" indicates that an isotropic phase of the dispersed inorganic nanosheet was observed.

**[Table 1]**

| Experimental Examples | Salt (TMA⁺) concentration (M) | Water/ethanol ratio of solvent | Concentration of inorganic nanosheet (wt%) | Birefringence in POM/crossed Nicols observation | SAXS stacking peak | Nanosheet state |
|---|---|---|---|---|---|---|
| 1 | 0.001 | 100:0 | 5 | × | × | I |
| 2 | | | 10 | × | × | I |
| 3 | | | 15 | × | × | I |
| 4 | | | 18 | × | × | I |
| 5 | 0.3 | | 3.4 | × | × | I |
| 6 | 1.5 | | 0.85 | × | △ | I (+I_{c}) |
| 7 | 1.6 | | | △ | ○ | I_{c} |
| 8 | 1.65 | | | △ | ○ | I_{c} |
| 9 | 1.7 | | | △ | ○ | I_{c} |
| 10 | 1.75 | | | △ | ○ | I_{c} |
| 11 | 2 | | 1 | × | ○ | I_{c} |
| 12 | | | 5 | ○ | ○ | I_{c} (+N_{c}) |
| 13 | | | 10 | ○ | ○ | I_{c} (+N_{c}) |
| 14 | | | 15 | ⊙ | ○ | N_{c} |
| 15 | | | 20 | ⊙ | ○ | N_{c} |
| 16 | | | 22 | ⊙ | ○ | N_{c} |
| 17 | | | 24 | ⊙ | ○ | N_{c} |
| 18 | 0.08 | 100:0 | 1 | × | × | I |
| 19 | | 60:40 | | × | × | I |
| 20 | | 50:50 | | ○ | ○ | I_{c} (+N_{c}) |
| 21 | | 40:60 | | ⊙ | ○ | N_{c} |
| 22 | | 30:70 | | ⊙ | ○ | N_{c} |

Fig. 3 is a diagram illustrating an observation result by a polarization microscope including a sample in which a liquid crystal phase is observed when the TMA⁺ concentration is 2 M.

As is found with reference to Table 1 and Fig. 3, in a case where the salt concentration was 2 M, which is a high salt concentration (Experimental Examples 11 to 17), it was confirmed that weak birefringence was exhibited at an inorganic nanosheet concentration of 5 wt% or more, and it was confirmed that strong birefringence was exhibited at an inorganic nanosheet concentration of 15 wt% or more. In Fig. 3, no birefringence was confirmed at an inorganic nanosheet concentration of 1 wt%. Whereas, weak birefringence was confirmed at inorganic nanosheet concentrations of 5 wt% and 10 wt%. In addition, when the inorganic nanosheet concentrations were 15 wt%, 20 wt%, and 24 wt%, strong birefringence was confirmed. Although not illustrated in Fig. 3, strong birefringence was confirmed when the inorganic nanosheet concentration was 22 wt%.

Whereas, as is found with reference to Table 1, in the samples with the inorganic nanosheet concentration of 0.85 wt% and the salt concentration of 1.5 M to 1.75 M (Experimental Examples 6 to 10), no birefringence was confirmed, or only flow birefringence was observed. Thus, it was confirmed that the samples were not in a liquid crystal state but in an isotropic phase. In addition, in the sample having the lowest salt concentration (10⁻³ M) (Experimental Examples 1 to 4), neither birefringence nor flow birefringence was confirmed when the inorganic nanosheet concentration was in the range of 5 wt% to 18 wt%. Thus, it was confirmed that the sample was not in a liquid crystal state but in an isotropic phase.

In the Onsager theory for estimating the liquid crystal phase transition concentration in the conventional inorganic nanosheet liquid crystal model, the liquid crystal transition concentration in the present examples is calculated to be 66 wt%, but in the present examples, birefringence is actually exhibited at 15 wt%, and transfer to some liquid crystal phase is considered, indicating a large difference from the Onsager theory. Therefore, it is presumed that the liquid crystal formation in the present examples is based on a mechanism different from the conventional mechanism.

For example, in a system with a low salt concentration (for example, [TMA⁺] = 10⁻³ M), no inorganic nanosheet laminated column or liquid crystal phase was expressed. That is, in the case of the experimental examples (Experimental Examples 1 to 4) in which the inorganic nanosheet concentration was low, birefringence peculiar to the liquid crystal phase was not observed, showing an isotropic colloid. In the conventional inorganic nanosheet system, as is found from the fact that a low salt concentration is a precondition for exhibiting high dispersibility and liquid crystallinity, it is presumed that a mechanism completely different from the conventional mechanism functions in the present examples.

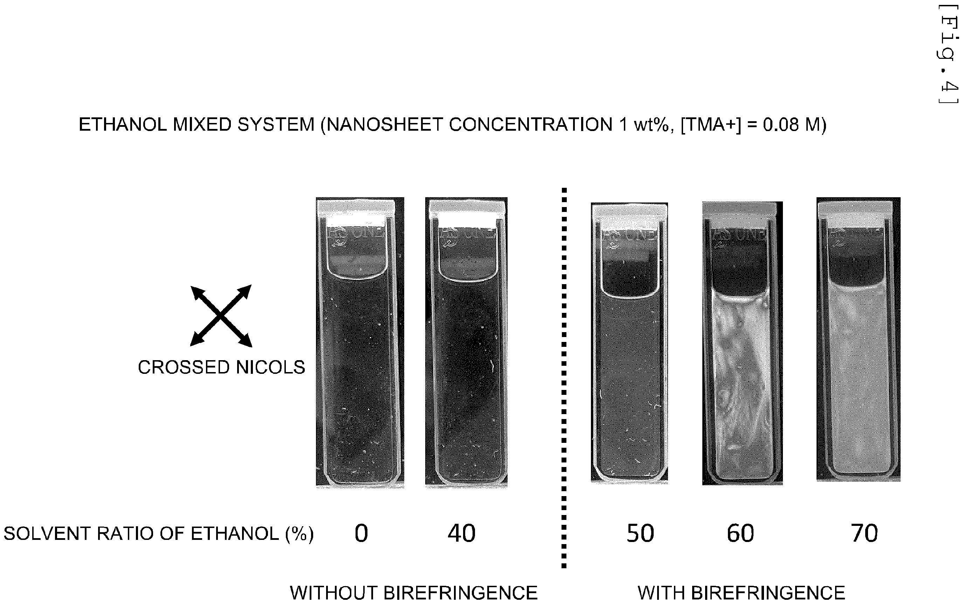

Fig. 4 is a diagram illustrating a crossed Nicols observation result when a water/ethanol ratio in the solvent is changed in a case where the TMA⁺ concentration is 0.08 M and the inorganic nanosheet concentration is 1 wt%.

As is found with reference to Table 1 and Fig. 4, it was indicated that the formation of the liquid crystal phase was also controlled by the solvent composition. That is, for the samples (Experimental Examples 18 to 22) having the inorganic nanosheet concentration of 1 wt% and the salt concentration of 0.08 M, when the ethanol ratio was 40% or less, birefringence was not confirmed, showing an isotropic phase. In addition, when the ethanol ratio was 50% or more, stationary birefringence was confirmed, showing a liquid crystal phase.

### (Structural analysis by SAXS)

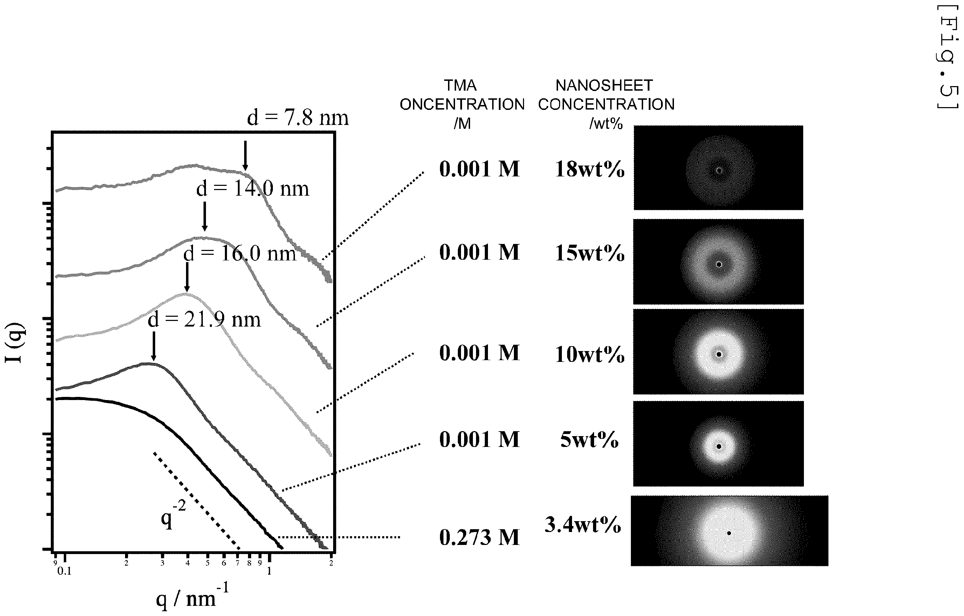

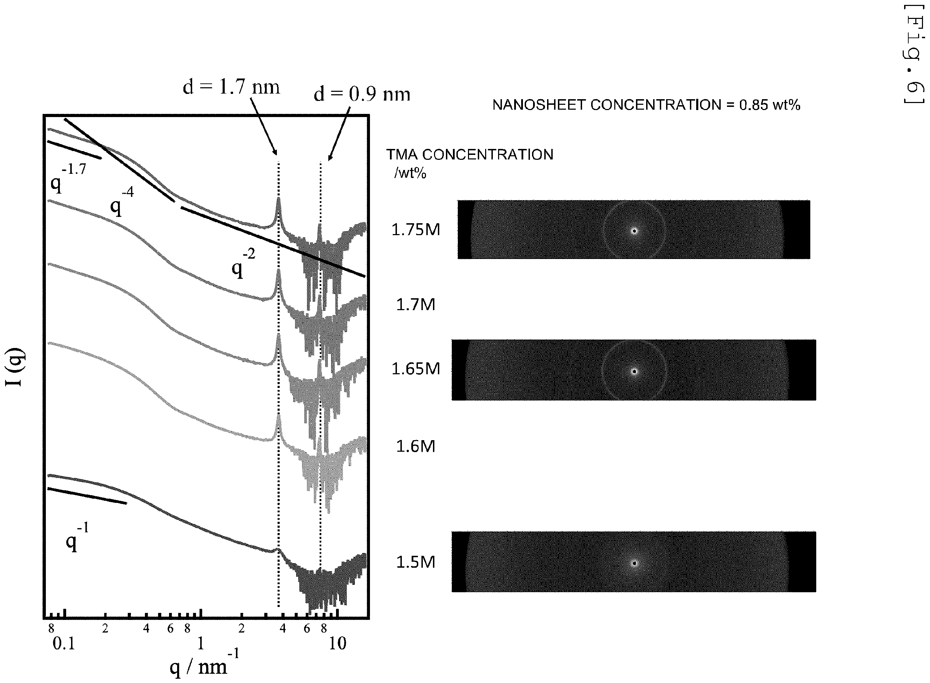

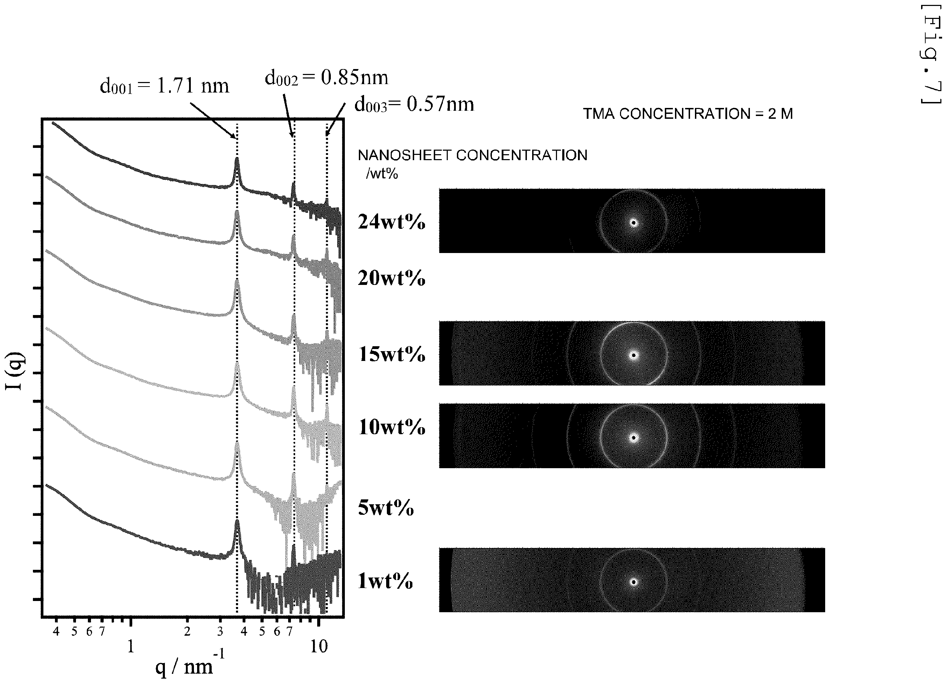

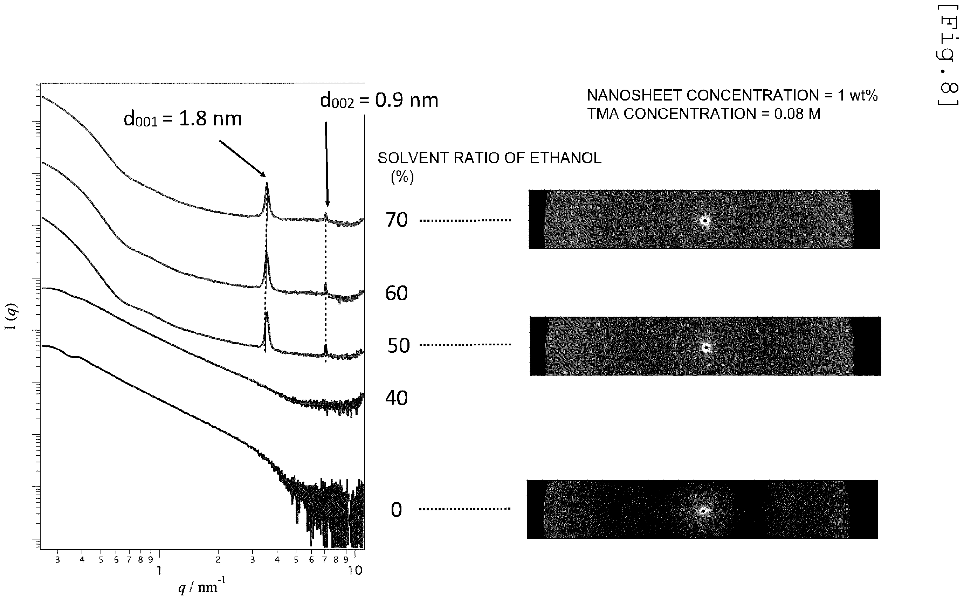

Fig. 5 illustrates the results of SAXS measurement when the inorganic nanosheet concentration was changed in the case of low TMA⁺ concentration (0.001 M to 0.3 M), Fig. 6 illustrates the results of SAXS measurement when the TMA⁺ concentration was changed in the case of the nanosheet concentration of 0.85 wt%, Fig. 7 illustrates the results of SAXS measurement when the inorganic nanosheet concentration was changed in the case of high TMA⁺ concentration (2 M), and Fig. 8 illustrates the results of SAXS measurement when the water/ethanol ratio in the solvent was changed in the case of the TMA⁺ concentration of 0.08 M and the nanosheet concentration of 1 wt%.

Specifically, Figs. 5 to 8 illustrate results of structural analysis by small-angle X-ray scattering (SAXS manufactured by Rigaku Corporation, NANOPIX, measurement conditions: camera lengths of 220 mm and 725 mm, CuKα characteristic X-ray, 30 V·40 mA, two-dimensional CCD detector) for a series of samples having different salt concentrations and different inorganic nanosheet concentrations. In SAXS, various information can be obtained, such as the presence or absence of a laminated structure and characteristic structural factors when the inorganic nanosheet laminated column is formed, the particle size of the inorganic nanosheet, the structural factor when the inorganic nanosheet is uniformly dispersed, and the anisotropy of the two-dimensional pattern that is evidence of formation of a liquid crystal phase in the inorganic nanosheet.

As a result of performing SAXS measurement on a sample (Experimental Example 5) having a low salt concentration (0.3 M, in Fig. 5 it is indicated as 0.273 M, but in the description of examples, it is rounded off and indicated as 0.3 M) and a low inorganic nanosheet concentration (3.4 wt%), as illustrated in Fig. 5, it was observed that a scattering pattern was flat in the low q region and followed a power law of q^-2 in the high q region. Such a scattering pattern was a "shape factor" characteristic of a thin flaky scatterer like an inorganic nanosheet, and was almost consistent with a theoretical scattering function of disk particles having a diameter of 11 nm and a thickness of 0.75 nm. This particle size is consistent with the size observed with TEM. In addition, the two-dimensional scattering pattern was isotropic. From this, it was confirmed that the inorganic nanosheets were isotropically dispersed in the solution.

In addition, when the salt concentration was low (10⁻³ M) and the inorganic nanosheet concentration was in the range of 5 to 18 wt%, as illustrated in Fig. 5, a scattering pattern was observed in which a broad peak overlapped the shape factor of the inorganic nanosheet described above (Experimental Examples 1 to 4). The two-dimensional scattering pattern was isotropic. The d value of the broad peak decreased to 21.9 nm, 16.0 nm, 14.0 nm, and 7.8 nm as the inorganic nanosheet concentration increased to 5 wt%, 10 wt%, 15 wt%, and 18 wt%. This broad peak represents the average distance between the isotropically uniformly dispersed inorganic nanosheets, indicating that the average distance between the inorganic nanosheets decreased as the inorganic nanosheet concentration increased.

As described above, it was indicated that when the salt concentration was low, the inorganic nanosheets were isotropically uniformly dispersed without forming any of the liquid crystal phase and the laminated column.

Then, the result of SAXS measurement on samples having an inorganic nanosheet concentration of 0.85 wt% and a salt concentration of 1.5 M to 1.75 M (Fig. 6) observed a sharp peak derived from a periodic structure in which inorganic nanosheets were laminated at d = 1.69 nm (in the figure, it is indicated as 1.7 nm). In addition, the second peak was observed at d = 0.85 nm (in the figure, it is indicated as 0.9 nm). A weak peak was observed when the salt concentration was 1.5 M, but a strong peak was observed when the salt concentration was 1.6 M or more. Then, the d value of the first peak of 1.69 nm was the surface space between the inorganic nanosheets in the inorganic nanosheet column. Considering that the thickness of the inorganic nanosheet monolayer was 0.75 nm, it was confirmed that TMA⁺ having a diameter of about 0.4 nm existed between the layers in a hydrated state.

In addition, scattering different from the power law of q^-2, which is a shape factor of the completely dispersed inorganic nanosheet, was observed. Specifically, when the salt concentration was 1.5 M, the power law of q^-1 was observed on the low q side and the power law of q^-2 was observed on the high q side. When the salt concentration was 1.6 M, the power law of q^-1.7 was observed on the low q side. Thus, characteristic scattering reaching the power law of q^-2 through the power law of q^-4 was confirmed. This characteristic scattering is considered to be caused by the shape of the laminated column. The 2D patterns are isotropic.

From these results, it was indicated that when the salt concentration was low, the inorganic nanosheets were in a completely dispersed isotropic phase, but when the salt concentration was increased, a laminated column was formed. In addition, it was indicated that when a laminated column was formed, if the concentration was low, the orientation of the laminated column did not occur, and an isotropic phase including the laminated column was obtained.

Subsequently, SAXS measurement was performed on a sample having an inorganic nanosheet concentration of 1 wt% to 24 wt% when the TMA⁺ concentration was high (2 M) (Fig. 7). As a result, as illustrated in Fig. 7, a sharp peak derived from a periodic structure in which inorganic nanosheets were laminated at an interval of 1.7 nm was observed up to the third peak. The 2D pattern was shown to have stronger anisotropy at higher concentrations. This has demonstrated that when the salt concentration is high, a laminated column is formed regardless of the inorganic nanosheet concentration. In addition, it was indicated that when the inorganic nanosheet concentration was high, a liquid crystal phase was formed.

In addition, for a sample having a nanosheet concentration of 1 wt% and a salt concentration of 0.08 M, SAXS measurement was performed for a system in which the ratio of water : ethanol in the solvent was changed from 100:0 to 30:70 (Fig. 8). When the ethanol ratio was 40% or less, a power law of q^-2 was observed on the high q side, no peak was observed, and the two-dimensional scattering pattern was isotropic, confirming that the inorganic nanosheets were uniformly dispersed. When the ethanol ratio was 50% or more, a sharp peak was observed at d = 1.8 nm and a second peak thereof was observed at d = 0.9 nm. In addition, a power law of q^-4 was observed in the region of q < 0.6 nm⁻¹. Based on these results, it was confirmed that an inorganic nanosheet laminated column was formed.

### (TEM observation)

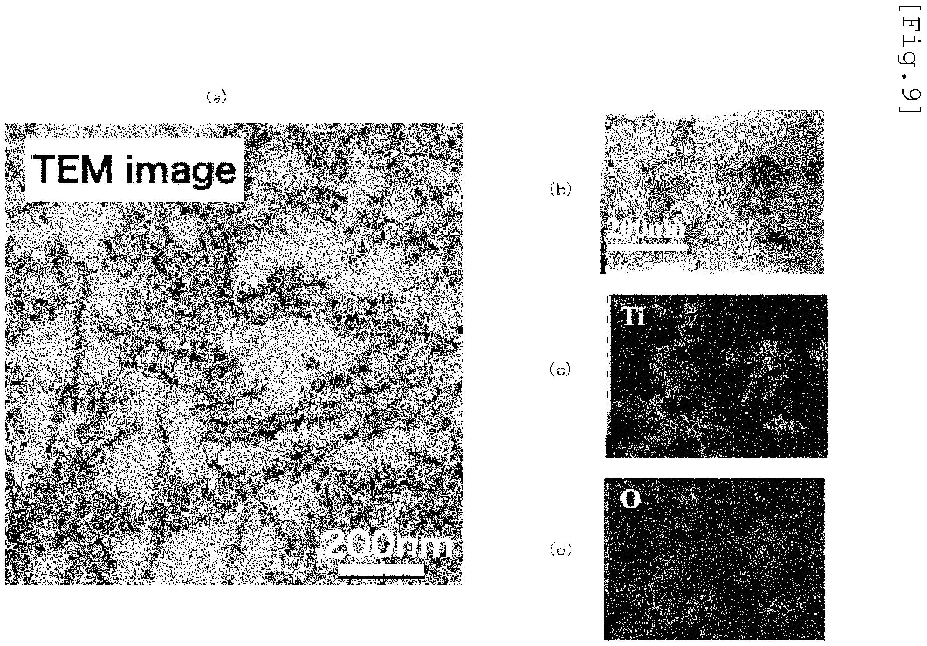

Fig. 9 is a diagram illustrating the results of TEM observation of a sample having a TMA⁺ concentration of 2 M and an inorganic nanosheet concentration of 22 wt%.

As a transmission electron microscope (TEM), JEM-2010 manufactured by JEOL Ltd. was used. Specifically, Fig. 9(a) illustrates a TEM image of an inorganic nanosheet column (inorganic nanosheet laminated structure) with monodisperse inorganic nanosheets laminated, Fig. 9(b) illustrates an image of element mapping of the inorganic nanosheet column, Fig. 9(c) illustrates an image of mapping of the inorganic nanosheet column with titanium, and Fig. 9(d) illustrates an image of mapping of the inorganic nanosheet column with oxygen.

As illustrated in Fig. 9(a), TEM observation of a sample having a TMA⁺ concentration of 2 M and an inorganic nanosheet concentration of 22 wt% showed that a string-like structure formed by laminating a plurality of monodisperse inorganic nanosheets at a predetermined interval was observed completely unexpectedly. In addition, as illustrated in Figs. 9(b), 9(c), and 9(d), from element mapping, it was confirmed that this string-like structure was constituted by titanium and oxygen, which are constituent elements of the inorganic nanosheets. Furthermore, the lateral width of the string-like structure was 11 nm, which coincided with the length of one side of the inorganic nanosheet.

As a result, it was confirmed that the observed string-like structure was an "inorganic nanosheet laminated column" in which inorganic nanosheets were laminated, and in the inorganic nanosheet liquid crystal composition, a "columnar nematic liquid crystal phase" was formed by orienting the column.

Observation of a sample having a salt concentration of 1.5 M showed that a string-like structure constituted by laminating monodisperse inorganic nanosheets was similarly observed in a sample having an inorganic nanosheet concentration of 1 wt% or more.

### (Conditions for producing inorganic nanosheet laminated structure and inorganic nanosheet liquid crystal composition)

The inorganic nanosheet laminated structure including a string-like structure is formed by setting the concentration of a salt coexisting with the inorganic nanosheets (for example, tetramethylammonium hydroxide) to, for example, a concentration of 1.6 M or more and setting the concentration of monodisperse inorganic nanosheets (for example, it is a lepidocrocite-type titanic acid nanosheet, the nanosheet shape is a rhombus, the average particle size of the long axis is 23 nm, and the standard deviation is 4.4 nm) to 0.85 wt% or more. However, it is preferable that the formation conditions are complexly defined by various conditions such as the inorganic nanosheet concentration, the inorganic nanosheet particle size, the salt concentration, the type of cations, the solvent composition, and the temperature. For example, it is preferable to define the formation conditions of the laminated structure based on at least both the concentration of the inorganic nanosheet and the salt concentration rather than defining the formation conditions based only on the salt concentration.

In addition, the inorganic nanosheet liquid crystal composition tends to express a liquid crystal phase when both the inorganic nanosheet concentration and the concentration of the salt coexisting therewith are high. For example, when the salt concentration is 2 M or more, a liquid crystal phase is expressed when the concentration of the monodisperse inorganic nanosheet is 15 wt% or more. However, it is preferable that the formation conditions are complexly defined by various conditions such as the inorganic nanosheet concentration, the inorganic nanosheet particle size, the salt concentration, the type of cations, the solvent composition, and the temperature. For example, it is preferable to define the expression conditions of the liquid crystal phase based on at least both the concentration of the monodisperse inorganic nanosheet and the salt concentration rather than defining the expression conditions based only on the salt concentration.

In the synthesis of the monodisperse inorganic nanosheet colloid, tetraethylammonium hydroxide (TEAOH), tetrapropylammonium hydroxide (TPAOH), and tetrabutylammonium hydroxide (TBAOH) were used in place of TMAOH to prepare a monodisperse inorganic nanosheet colloid in the same manner as TMAOH. For each of the prepared monodisperse inorganic nanosheet colloids, an inorganic nanosheet liquid crystal composition having a low salt concentration (salt concentration: 10⁻⁴ M to 10⁻³ M) or a high salt concentration (salt concentration: 10⁻³ M to 2 M) and an inorganic nanosheet concentration in the range of 0.5 wt% to 24 wt% was prepared. As a result, it was confirmed that the same results as in the case of TMAOH were obtained.

Therefore, the detailed conditions under which the inorganic nanosheet laminated structure (inorganic nanosheet column) is formed are not yet clear, but the factors are presumed such that the standard deviation of the average particle size of the inorganic nanosheets is a predetermined value or less (for example, the value is equal to or less than the value at which the inorganic nanosheet laminated structure is formed), the inorganic nanosheets need to be in a predetermined concentration range, and the concentration of the salt coexisting with the inorganic nanosheets is a predetermined concentration or more (for example, the concentration is equal to or higher than the concentration at which the inorganic nanosheet laminated structure is formed). The predetermined concentration of salt required is presumed to depend on the type of salt.

### <Reversible change by temperature>

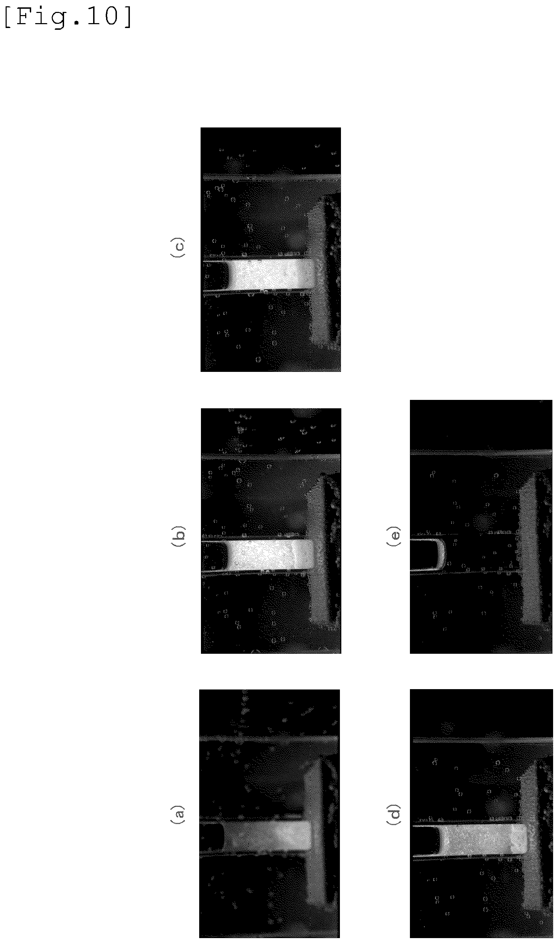

Fig. 10 illustrates that the inorganic nanosheet liquid crystal composition reversibly transitions from an isotropic phase to a flow-birefringent isotropic phase by a temperature change. Specifically, Fig. 10(a) illustrates the result of crossed Nicols observation at 50°C in the temperature increasing process, Fig. 10(b) illustrates the result of crossed Nicols observation at 60°C in the temperature increasing process, Fig. 10(c) illustrates the result of crossed Nicols observation at 70°C in the temperature increasing process, Fig. 10(d) illustrates the result of crossed Nicols observation at 60°C in the temperature decreasing process, and Fig. 10(e) illustrates the result of crossed Nicols observation at 50°C in the temperature decreasing process.

Specifically, in place of tetramethylammonium hydroxide (TMAOH), tetrabutylammonium hydroxide (TBAOH) was used to prepare a monodisperse inorganic nanosheet colloid in the same manner as described above. Then, a sample having a salt concentration (that is, the concentration of tetrabutylammonium [TBA⁺ concentration]) of 0.3 M and an inorganic nanosheet concentration of 3.8 wt% was prepared in the same manner as described above. For the obtained sample, a process of raising the temperature from room temperature (25°C) to 80°C and lowering the temperature from 80°C to room temperature was subjected to the crossed Nicols observation.

As a result, it was confirmed that reversible transition from an isotropic phase to a flow-birefringent isotropic phase occurs due to a temperature change. That is, in the inorganic nanosheet liquid crystal composition containing tetrabutylammonium, a transparent isotropic phase was exhibited at room temperature, and as illustrated in Fig. 10(a), the phase was changed from a temperature of 50°C to the flow-birefringent isotropic phase that was cloudy. As illustrated in Figs. 10(b) and 10(c), the case of the temperature of 60°C to 70°C showed the flow-birefringent isotropic phase that was cloudy. Thereafter, as illustrated in Fig. 10(d), when the temperature was lowered to 60°C, transition to a transparent isotropic phase was started, and transition to the isotropic phase was completed in Fig. 10(e). This phase transition was reversible by temperature.

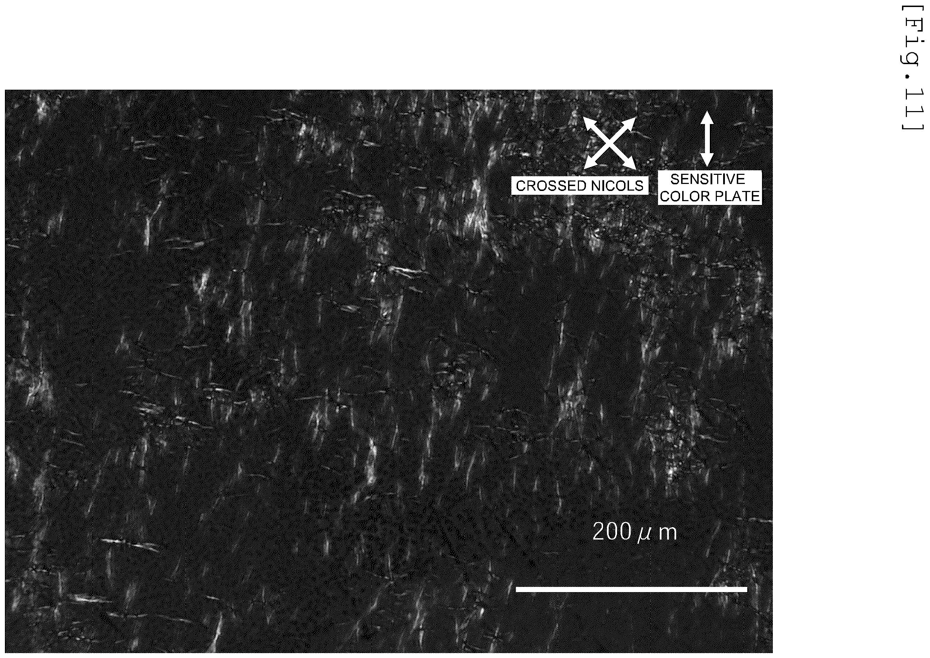

From the POM observation, it was found that at a low temperature, the inorganic nanosheets were completely dispersed, but at a high temperature, the inorganic nanosheet columns further aggregated to form supercrystals in a needle-like form. From the POM observation at 75°C (Fig. 11), it was confirmed that the needle-shaped crystal had a length of several tens of µm and a width of about 1 um. In addition, in the POM image, a yellow interference color was observed when the orientation of the sensitive color plate coincided with the long axis orientation of the crystal, and a blue interference color was observed when the orientation of the sensitive color plate and the long axis orientation of the crystal were orthogonal to each other. Therefore, it was confirmed that the inorganic nanosheet surfaces were arranged in a direction perpendicular to the long axis direction of the crystal.

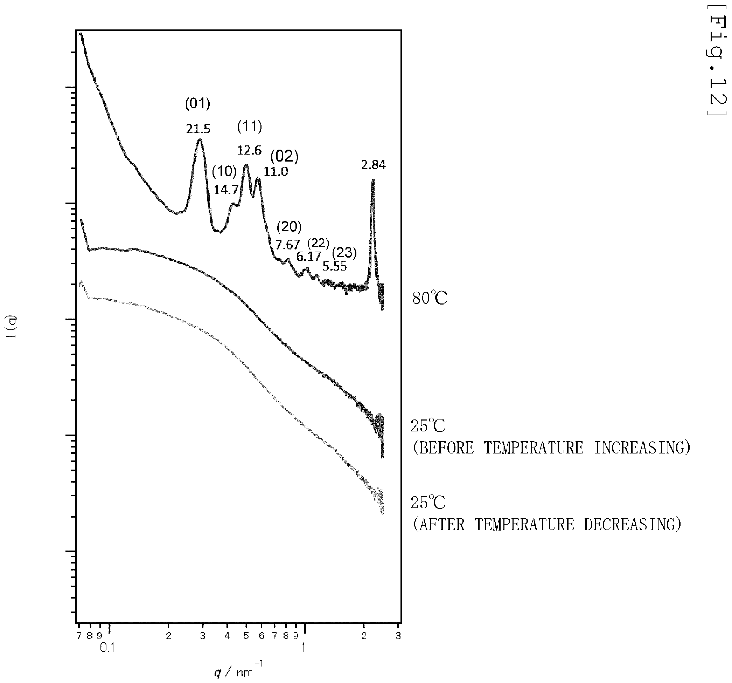

Fig. 12 illustrates a result of SAXS measurement indicating that the inorganic nanosheet liquid crystal composition used in Fig. 10 reversibly forms orthorhombic needle-like long crystals by temperature change. The numerical value in Fig. 12 indicates the d value (nm) of the peak, and the numerical value with () indicates the attribution of the crystal plane. In this SAXS measurement (Fig. 12), a peak at d = 2.84 nm belonging to a laminated structure in which hydrated TBA ions were sandwiched between layers was confirmed, and the formation of an inorganic nanosheet laminated column was confirmed. Furthermore, peaks attributed to (01) plane, (10) plane, (11) plane, (02) plane, (20) plane, (22) plane, and (23) plane of orthorhombic with lattice constants a = 21.5 nm and b = 12.6 nm were confirmed at d = 21.5, 14.7, 12.6, 11.0, 7.67, 6.17, and 5.55 nm, respectively. These lattice constants were almost consistent with the lengths of the long axis and the short axis of trapezoidal inorganic nanosheets, confirming supercrystals formed by further aggregating the inorganic nanosheet columns.

### <Expected technical principle>

The formation of the columnar nematic liquid crystal phase in the case of a high salt concentration (for example, when the salt concentration is 2M or the like) in the above examples is considered to be due to the fact that the repulsive force caused by the charge of the inorganic nanosheet was blocked by the presence of the salt, and the laminate (column) was formed by the van der Waals attractive force or the attractive force through counter cations. This itself can be explained by the classical DLVO theory. However, in the conventional inorganic nanosheets, the particle size distribution is extremely large, and at such a high salt concentration, only irregularly laminated aggregates are generated. Thus, the formation of the inorganic nanosheet columns according to the examples is considered to be based on the monodispersity of the particle size. In addition, the particle size of the inorganic nanosheet according to the examples (particle size: about several µm) was smaller than that of the inorganic nanosheets used conventionally (particle size: about several tens of nm), and it is thus considered that the interaction between the inorganic nanosheets was smaller than that of the inorganic nanosheets used conventionally, and as a result, a column having a substantially uniform shape was formed.

In addition, the inorganic nanosheet laminated structure and the inorganic nanosheet liquid crystal composition according to the examples are characterized in that colloids of substantially monodisperse inorganic nanosheets having an extremely narrow particle size distribution and a thickness of 1 nm or less (specifically, 0.75 nm) were prepared. From this monodisperse inorganic nanosheet colloid, the inorganic nanosheet laminated structure (inorganic nanosheet laminated column) is formed, and this further forms a columnar nematic liquid crystal phase (liquid crystal phase in which the inorganic nanosheet laminated structure is oriented). Moreover, the inorganic nanosheet laminated structure and the inorganic nanosheet liquid crystal composition can be reversibly changed between the isotropic phase and the nematic phase and between the nematic phase and the columnar nematic phase by adjusting predetermined parameters (for example, temperature).

Conventionally, in a nanoplate system having a small particle size distribution but having a much larger thickness than that of an inorganic nanosheet, there has been reported a behavior in which, when the plate concentration is increased, a phase transition from an isotropic phase to a nematic phase occurs and a phase transition from the nematic phase to a columnar phase occurs (van der Kooij, F. M, et al., Nature., 2000, 406, 868). However, since the anisotropy ratio is small due to large thickness of the plate, and the liquid crystal phase transition concentration is extremely high, characteristics such as a large specific surface area as in the nanosheet material cannot be utilized. Whereas, in the inorganic nanosheet laminated structure and the inorganic nanosheet liquid crystal composition according to the present examples, since the anisotropy ratio is large due to use of a monodisperse inorganic nanosheet having an extremely small thickness of about 1 nm, characteristics such as a large specific surface area of the inorganic nanosheet can be sufficiently utilized.

The embodiments and examples of the present invention have been described above, and the embodiments and examples described above do not limit the invention according to claims. In addition, it should be noted that not all combinations of features described in the embodiments and examples are essential for means for solving the problems to be solved by the invention.

The method for producing an inorganic nanosheet laminated structure and the method for producing an inorganic nanosheet liquid crystal composition according to the present embodiment can also be mentioned in the following supplementary notes that should not be confused with claims.

### (Supplementary note 1)

A method for producing an inorganic nanosheet laminated structure, the method comprising:
a step of mixing an ammonium salt, a metal alkoxide, and a single solvent (for example, water) to prepare a mixed solution;
a step of refluxing the mixed solution to synthesize an inorganic nanosheet; and
a step of adjusting a concentration of the inorganic nanosheet and a concentration of the ammonium salt in the mixed solution after the refluxing to a concentration at which a plurality of the inorganic nanosheets are laminated at room temperature.

### (Supplementary note 2)

The method for producing an inorganic nanosheet laminated structure according to supplementary note 1, wherein a particle size distribution of the inorganic nanosheet is approximated by a normal distribution function with a single peak, and a standard deviation of the particle size distribution is less than 50% of an average particle size of the inorganic nanosheet.

### (Supplementary note 3)

A method for producing an inorganic nanosheet laminated structure, the method comprising:
a step of mixing an ammonium salt, a metal alkoxide, and a solvent to prepare a mixed solution;
a step of refluxing the mixed solution to synthesize an inorganic nanosheet; and
a step of adding a solvent different from the solvent to the mixed solution after the refluxing, adjusting a mixing ratio between the solvent and the different solvent to a concentration at which a plurality of the inorganic nanosheets are laminated, and adjusting a concentration of the inorganic nanosheet and a concentration of the ammonium salt to a concentration at which a plurality of the inorganic nanosheets are laminated at room temperature.

### (Supplementary note 4)

A method for producing an inorganic nanosheet liquid crystal composition, the method comprising:
a step of mixing an ammonium salt, a metal alkoxide, and a single solvent to prepare a mixed solution;
a step of refluxing the mixed solution;
a step of concentrating an inorganic nanosheet in the mixed solution after the refluxing; and
a step of adjusting a concentration of the ammonium salt in the mixed solution to a concentration at which a predetermined liquid crystal phase is expressed at room temperature.

### (Supplementary note 5)

The method for producing an inorganic nanosheet liquid crystal composition according to supplementary note 4, wherein a particle size distribution of the inorganic nanosheet is approximated by a normal distribution function with a single peak, and a standard deviation of the particle size distribution is less than 50% of an average particle size of the inorganic nanosheet.

### (Supplementary note 6)

A method for producing an inorganic nanosheet liquid crystal composition, the method comprising:
a step of mixing an ammonium salt, a metal alkoxide, and a solvent to prepare a mixed solution;
a step of refluxing the mixed solution;
a step of concentrating an inorganic nanosheet in the mixed solution after the refluxing; and
a step of adding a solvent different from the solvent to the mixed solution, adjusting a mixing ratio between the solvent and the different solvent to a concentration at which a predetermined liquid crystal phase is expressed, and adjusting a concentration of the ammonium salt in the mixed solution to a concentration at which the predetermined liquid crystal phase is expressed at room temperature.

### (Supplementary note 7)

An inorganic nanosheet laminated structure, comprising a string-like structure including a plurality of laminated inorganic nanosheets.

### (Supplementary note 8)

The inorganic nanosheet laminated structure according to supplementary note 7, wherein a particle size distribution of the inorganic nanosheet is approximated by a normal distribution function with a single peak, and a standard deviation of the particle size distribution is less than 50% of an average particle size of the inorganic nanosheet.

### (Supplementary note 9)

The inorganic nanosheet laminated structure according to supplementary note 7 or 8, wherein the inorganic nanosheet is formed by reacting an ammonium salt with a metal alkoxide.

### (Supplementary note 10)

The inorganic nanosheet laminated structure according to any one of supplementary notes 7 to 9, wherein the string-like structure is oriented by setting a concentration of the inorganic nanosheet to a predetermined concentration or more in a predetermined solvent containing a predetermined salt, and a columnar nematic liquid crystal phase is expressed.

### (Supplementary note 11)

An inorganic nanosheet liquid crystal composition comprising:
an inorganic nanosheet laminated structure including a string-like structure including a plurality of laminated inorganic nanosheets;
a solvent; and
a predetermined salt, wherein
the inorganic nanosheet laminated structure is oriented in the solvent to form a columnar nematic phase.

### (Supplementary note 12)

The inorganic nanosheet liquid crystal composition according to supplementary note 11, wherein a particle size distribution of the inorganic nanosheet is approximated by a normal distribution function with a single peak, and a standard deviation of the particle size distribution is less than 50% of an average particle size.

### (Supplementary note 13)

A method for producing an inorganic nanosheet laminated structure, the method comprising:
a step of mixing an ammonium salt, a metal alkoxide, and a solvent to prepare a mixed solution;
a step of refluxing the mixed solution to synthesize an inorganic nanosheet; and
a step of adjusting a concentration of the inorganic nanosheet and a concentration of the ammonium salt in the mixed solution after the refluxing to a concentration at which a plurality of the inorganic nanosheets are laminated.

### (Supplementary note 14)

A method for producing an inorganic nanosheet liquid crystal composition, the method comprising:
a step of mixing an ammonium salt, a metal alkoxide, and a solvent to prepare a mixed solution;
a step of refluxing the mixed solution;
a step of concentrating an inorganic nanosheet in the mixed solution after the refluxing; and
a step of adjusting a concentration of the ammonium salt in the mixed solution to a concentration at which a predetermined liquid crystal phase is expressed.

## Claims

1. An inorganic nanosheet laminated structure comprising a string-like structure in which a plurality of inorganic nanosheets having a substantially uniform particle shape are laminated, wherein
a particle size distribution of the inorganic nanosheets is approximated by a normal distribution function with a single peak, a standard deviation of the particle size distribution is less than 50% of an average particle size of the inorganic nanosheets, and
the particle size distribution is a particle size distribution in which when a maximum width of the inorganic nanosheets in plan view is a lateral width, an average value of the lateral width is determined as a particle size.

2. The inorganic nanosheet laminated structure according to claim 1, wherein the string-like structure is oriented by setting a concentration of the inorganic nanosheet to a predetermined concentration or more in a predetermined solvent containing a predetermined salt, and a columnar nematic liquid crystal phase is expressed.

3. An inorganic nanosheet liquid crystal composition comprising:
an inorganic nanosheet laminated structure including a string-like structure in which a plurality of inorganic nanosheets having a substantially uniform particle shape are laminated, in which a particle size distribution of the inorganic nanosheets is approximated by a normal distribution function with a single peak, a standard deviation of the particle size distribution is less than 50% of an average particle size, and the particle size distribution is a particle size distribution in which when a maximum width of the inorganic nanosheets in plan view is a lateral width, an average value of the lateral width is determined as a particle size;
a solvent; and
a predetermined salt, wherein
the inorganic nanosheet laminated structure is oriented in the solvent to form a columnar nematic phase.

4. A method for producing an inorganic nanosheet laminated structure, the method comprising:
a step of mixing an ammonium salt, a metal alkoxide, and a solvent to prepare a mixed solution;
a step of refluxing the mixed solution to synthesize an inorganic nanosheet in which a particle shape is substantially uniform, a particle size distribution is approximated by a normal distribution function with a single peak, a standard deviation of the particle size distribution is less than 50% of an average particle size, and the particle size distribution is a particle size distribution in which when a maximum width of the inorganic nanosheet in plan view is a lateral width, an average value of the lateral width is determined as a particle size; and
a step of adjusting a concentration of the inorganic nanosheet and a concentration of the ammonium salt in the mixed solution after the refluxing to a concentration at which a plurality of the inorganic nanosheets are laminated.

5. A method for producing an inorganic nanosheet liquid crystal composition, the method comprising:
a step of mixing an ammonium salt, a metal alkoxide, and a solvent to prepare a mixed solution;
a step of refluxing the mixed solution;
a step of concentrating an inorganic nanosheet that is an inorganic nanosheet of the mixed solution after the refluxing, in which a particle shape is substantially uniform, a particle size distribution of the inorganic nanosheet is approximated by a normal distribution function with a single peak, a standard deviation of the particle size distribution is less than 50% of an average particle size, and the particle size distribution is a particle size distribution in which when a maximum width of the inorganic nanosheet in plan view is a lateral width, the average value of the lateral width is determined as a particle size; and
a step of adjusting a concentration of the ammonium salt in the mixed solution to a concentration at which a predetermined liquid crystal phase is expressed.
